# EUROPEAN PATENT SPECIFICATION

(11) **EP 3 134 686 B1**
(45) Date of publication and mention of the grant of the patent: **17.02.2021**
(21) Application number: 14727120.9
(22) Date of filing: 21.04.2014
(51) Int. Cl.: F24F 12/00

(54) **ACTIVE REGENERATIVE HEATING AND COOLING**
AKTIVE REGENERATIVE HEIZUNG UND KÜHLUNG
CHAUFFAGE ET REFROIDISSEMENT RÉGÉNÉRATIFS ACTIFS

(43) Date of publication of application: 01.03.2017
(73) Proprietor: United Technologies Corporation, Farmington, CT 06032 (US)
(72) Inventor: ANNAPRAGADA, Subramanyaravi, Shrewsbury, Massachusetts 01545 (US); JONSSON, Ulf J., South Windsor, Connecticut 06074 (US); RADCLIFF, Thomas D., Vernon, Connecticut 06066 (US); KUCZEK, Andrzej Ernest, Bristol, Connecticut 06010 (US); WESSON, John P., West Hartford, Connecticut 06107 (US); HERRING, Neal R., East Hampton, Connecticut 06424 (US); OCHS, Stuart S., Coventry, CT 06238 (US); FENG, Yinshan, South Windsor, Connecticut 06074 (US); GORBOUNOV, Mikhail B., South Windsor, Connecticut 06074 (US); RANJAN, Ram, West Hartford, CT 06117 (US)
(74) Representative: Dehns
(86) International application number: PCT/US2014/034753
(87) International publication number: WO 2015/163839

(56) References cited:
- EP-A2- 2 148 163
- WO-A1-01/81837
- WO-A1-2009/147558
- US-A- 4 014 380
- US-A1- 2010 018 681

## Description

### BACKGROUND

Heat pumps based on field-active heating/cooling processes such as the magnetocaloric, electrocaloric, and thermoelastic effect have the potential to replace traditional refrigerant-based heating, ventilation, and air-conditioning (HVAC) systems. An electrocaloric effect-based device in particular may result in a totally solid state device needing no moving parts to deliver a high coefficient of performance (COP) and capacity. Because the stated effects provide relatively small temperature lifts, regeneration in the form of a regenerative heat exchanger may be applied to increase lift to levels needed for environmental control.

A field-active material heats up and cools down almost reversibly as an applied field is cycled. To provide space heating/cooling capacity, the alternately created heating or cooling in the material needs to be transferred to either the indoor or outdoor space in a synchronous fashion based on whether cooling or heating in the space is required. One means of performing this thermal switching function is to translate the working fluid into and out of the active element. The fluid is translated completely through the unit if the temperature lift is adequate for the application, while it is translated only partially through the unit if regeneration is needed to increase the lift. In this case the moving air serves the function of regenerative heat storage. The active device, whether subject to compete or partial fluid translation, is referred to herein as a "regenerator". This invention describes means to control the motion of the working fluid in a regenerator in a synchronous manner.

US 2010/018681 relates to a single flow circuit heat exchange device.

### BRIEF SUMMARY

An embodiment is directed to a method comprising: the features of claim 1.

An embodiment is directed to a system comprising: the features of claim 8.

Additional embodiments are described below.

### BRIEF DESCRIPTION OF THE DRAWINGS

The present disclosure is illustrated by way of Example and not limited in the accompanying figures in which like reference numerals indicate similar elements.
FIG. 1 is a diagram of an exemplary ejector based linear system;
FIG. 2 is a diagram of an exemplary rotary pressure pulsing system;
FIG. 3 is a diagram of the sequential stages of operation of an exemplary system comprising two field-active regenerator modules;
FIG. 4 is a diagram of an exemplary system comprising a field-active regenerator module and pumps;
FIG. 5 illustrates a flow chart of an exemplary method; and
FIG. 6 illustrates an exemplary computing system.

### DETAILED DESCRIPTION

It is noted that various connections are set forth between elements in the following description and in the drawings. It is noted that these connections in general and, unless specified otherwise, may be direct or indirect and that this specification is not intended to be limiting in this respect. In this respect, a coupling between entities may refer to either a direct or an indirect connection.

Exemplary embodiments of apparatuses, systems, and methods are described for controlling a movement of heat transfer fluid across one or more regenerators and a mixing of this fluid with ambient air.

In some embodiments the heat transfer fluid may be hot and cold ambient air.

In some embodiments the heat transfer fluid in intimate contact with the regenerator may be isolated from mixing with the ambient air by an intermediate heat exchanger.

In some embodiments, synchronous alternate pressure oscillations on cold and hot sides of a regenerator may be provided. To provide cooling, the pressure on the cold and hot side may be synchronized so that the fluid is pushed indoors during the cooling part of the regeneration cycle and fluid is pushed outdoors during the heating part of the regeneration cycle. This process is reversed to provide heating. The pressure oscillations may be achieved through a linear actuator or a rotary fan design.

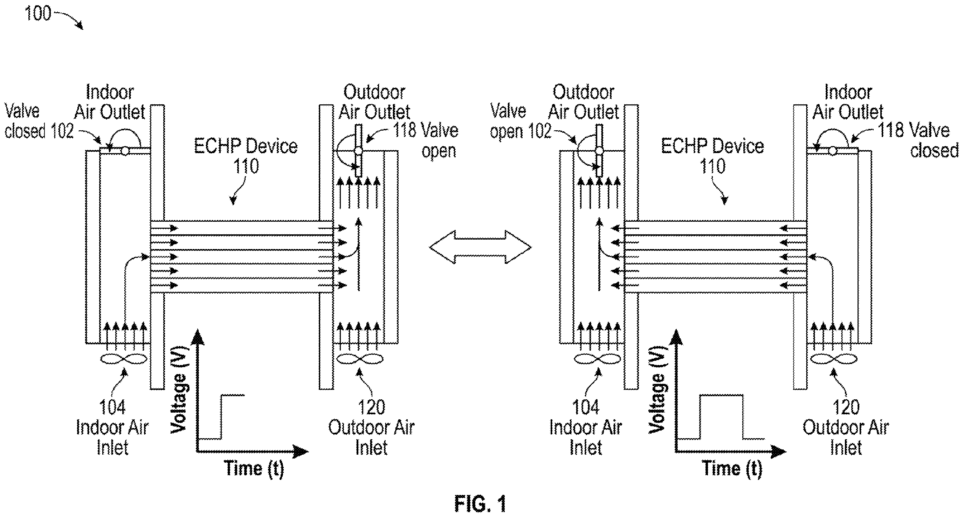

Referring to FIG. 1, an ejector based linear system 100 operating in a cooling mode is shown. The system 100 achieves cooling by closing a valve 102 on the cold side (e.g., the indoors) to raise the pressure and push a flow of fluid from an inlet 104 into a heat pump device 110, such as an electrocaloric heat pump (ECHP) device. A valve 118 is opened at the same time on the hot side (e.g., the outdoors). Next, the valve 102 is opened and the valve 118 is closed, which sucks the fluid from an inlet 120 and the device 110 back into the cold side, acting like an ejector. The mechanism enhances mixing of the hot or cold fluid from the regenerator with the ambient air, ensuring that hot or cold fluid from the regenerator is not simply sucked back into the regenerator without mixing

The pressure levels referred to above are switched for heat pumping.

The pressure oscillations may be synchronized at specific phase shifts with the field being applied to the active material 110 to gain the best performance, and that phase shift may change for different capacities and lifts. Also, the duration and/or shape of the pressure oscillation may be regulated to provide the correct volume flow of fluid through the system 100.

The system 100 may operate on the basis of pressure generated by a running (e.g., a continuous running) of one or more fans. The pressure may be controlled by the state (e.g., the degree of how open or closed) of the valves 102 and 118. Ideally, the design of the valves 102 and 118 may be made as simple as possible in order to reduce cost

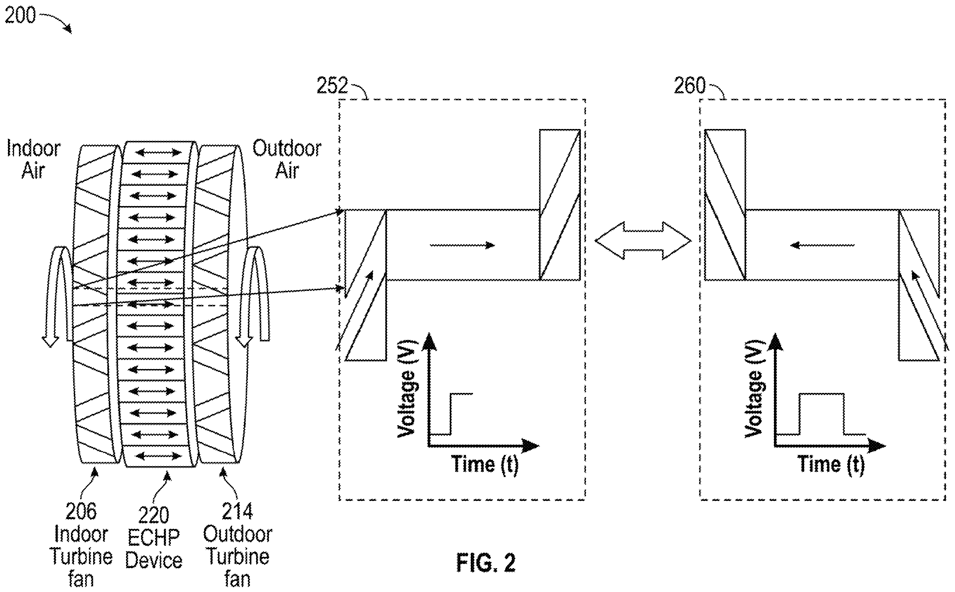

Referring to FIG. 2, a rotary pressure pulsing system 200 operating in a cooling mode is shown. The system 200 may have two rotating turbine fans 206 and 214, one either side of a regenerator 220. The regenerator 220 may correspond to the device 110 in some embodiments.

The vanes of the cold side (e.g., indoor) and hot side (e.g., outdoor) turbine fans 206 and 214 may be out of phase with respect to one another and push and pull fluid into the regenerator 220 alternatively. The vanes may be synchronized with a voltage signal.

The shapes of the vanes may be designed so that when the regenerator 220 is heating, the cold side vane may act as a compressor of fluid and the hot side vane may act as an expander which may result in the heated fluid being pushed out on to the hot side, as reflected via the dashed box 252. Similarly, when the regenerator 220 is in cooling mode, the hot side vane may act as a compressor and the cold side vane may act as an expander pushing cold fluid to the cooled side, as reflected via the dashed box 260.

The vanes of the fans 206 and 214 may be used to create localized pressure or pressure differential in proximity to the vanes or fans. The speed, phase, and position of the fans, vanes, or blades may be controlled (e.g., time-controlled) to obtain an appropriate movement of fluid back and forth and mixing with ambient air.

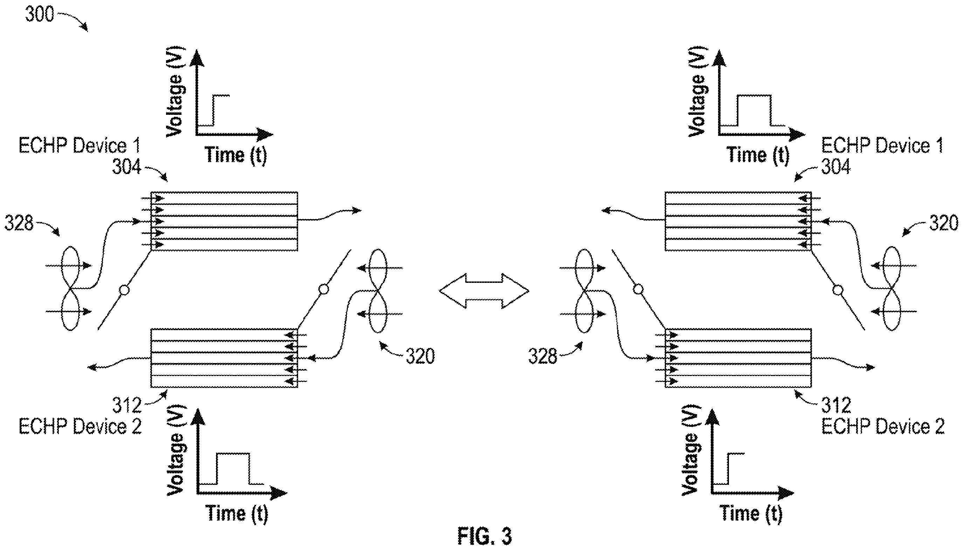

Referring to FIG. 3, a system 300 in accordance with one or more embodiments is shown. The system 300 may include two regeneration devices or units 304 and 312 with continuous hot and cold fluid streams which are switched alternately between the two units 304 and 312 to provide continuous space heating/cooling. The unit 304 and/or the unit 312 may correspond to one or more of the device 110 and the device 220,

An indoor space cooling cycle is referenced in FIG. 3, but by simply shifting the phase by 180 degrees, the system 300 can be used for indoor space heating. The system 300 when used for cooling may include two modes as described in further detail below.

In the first mode (shown on the left-hand side of the center dual-arrow in FIG. 3), a hot ambient fluid stream 320 from the outdoors may be diverted into die unit 312 which may be going through a cooling part of a regenerative cycle. The fluid cooled below indoor ambient in the unit 312 may be pushed indoors and the new hot outdoor fluid stream 320 may enter the unit 312. Meanwhile, a cold ambient fluid stream 328 may be diverted into the unit 304 which may be going through a heating part of a regenerative cycle. The heated fluid above outdoor temperature in the unit 304 may be purged outdoors as the new indoor fluid stream 328 is brought into the unit 304.

In the second mode (shown on the right-hand side of the center dual-arrow in FIG. 3), the flow streams 320 and 328 may be flipped between the units 304 and 312 relative to the first mode. The hot ambient fluid stream 320 from outdoors may be diverted from the unit 312 to the unit 304, which may now be going through a cooling part of the regenerative cycle. The fluid cooled below indoor ambient in the unit 304 may be pushed indoors and new hot Outdoor fluid stream 320 may enter the unit 304. Meanwhile, the cold ambient fluid stream 328 may be diverted into the unit 312, which may be going through a heating part of the regenerative cycle. The heated fluid above outdoor temperature in the unit 312 may be purged outdoors as the indoor fluid stream 328 is brought into unit 312.

The system 300 of FIG. 3 depicts the use of two regenerator devices 304 and 312 that are (substantially) one-hundred eighty degrees out of phase with respect to one another regarding the oriented direction of movement of fluid across or through the devices 304 and 312. A departure from one-hundred eighty degrees may represent a loss in efficiency.

In reference to FIG. 3, any number of regenerator devices may be used in a given embodiment. The number of regenerator devices used may be a function of the beating or cooling capacity that may be needed in a given application environment. As an example of adding two additional devices (e.g., a first additional device 304 and a second additional device 312), a combination of the two additional devices 304 and 312 may operate ninety degrees out of phase with respect to the combination of devices 304 and 312.

In some embodiments, a positive displacement may be used along with checks and vents to provide regeneration by synchronized alternate pumping of fluid. In some embodiments, pumping mechanisms and checks may include pistons/electro-magnetically driven membranes and flapper/poppet valves, respectively.

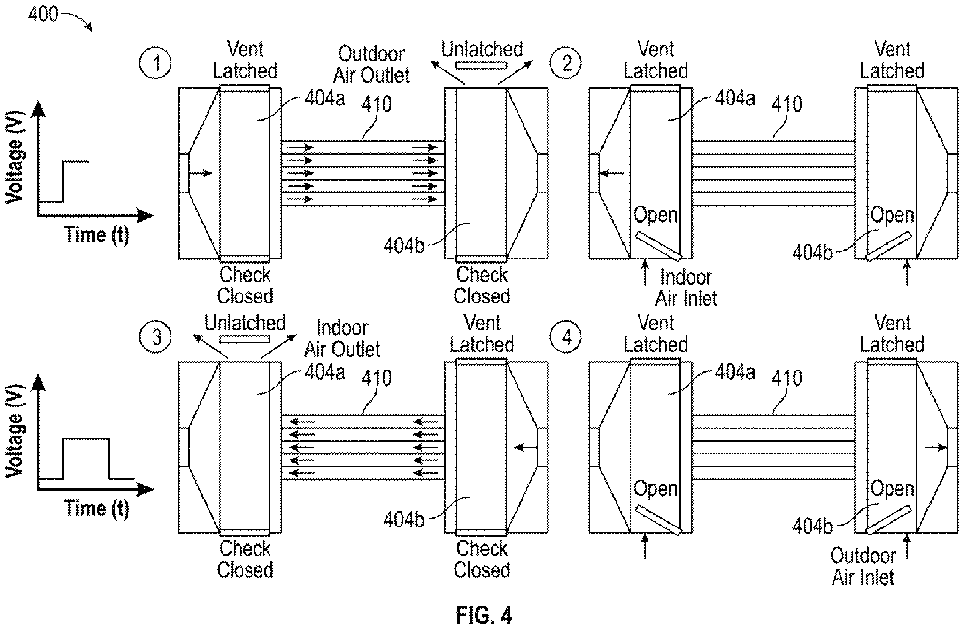

Referring to FIG. 4, a system 400 in accordance with one or more embodiments is shown. The system 400 may include a regenerative device or unit 410. The device 410 may correspond to one or more of the device 304, the device 312, the device 220, and the device 110.

The system 400 may include any number or type of pumps, such as linear pumps, piston pumps, etc. A first pump 404a may be associated with an indoor space or environment and a second pump 404b may be associated with an outdoor space or environment. The pumps 404a and 404b may be operated in a discontinuous fashion or manner and may be used to control a flow of fluid over time.

Each of the pumps 404a and 404b may include a check (shown at the bottom of the pumps in FIG. 4) that may selectively open or close a respective fluid inlet for the pump. Each of the pumps 404a and 404b may include a vent (shown at the top of the pumps in FIG. 4) that may selectively open or close a respective fluid outlet for the pump. The state of the checks and vents associated with each of the pumps 404a and 404b may be controlled in order to provide a controlled flow of fluid over time,

The system 400 may be configured to providing heating or cooling for the indoor space. The exemplary sequence of operations #1-4 denoted in FIG. 4 are described below for purposes of cooling the indoor space. One skilled in the art would appreciate, based on this disclosure, that a similar sequence of operations could be constructed for purposes of heating the indoor space.

In operation #1, the regenerative elements or device 410 may be going through a heating cycle. The cold/indoor side fluid may be pushed by the pump 404a towards the device 410, which may push out the fluid on the hot/outdoor side through the unlatched vent associated with the pump 404b. During operation #1, the vent and check associated with the pump 404a may be latched and closed, respectively. During operation #1, the check associated with the pump 404b may be closed.

In operation #2, the cold/indoor side fluid pump 404a may be turned-off, disengaged, or withdrawn. The check associated with the pump 404a may be opened to bring in cold ambient fluid. During operation #2, the vent associated with the pump 404a may be latched. During operation #2, the vent associated with the pump 404b may be latched. During operation #2, the check associated with the pump 404b may be open or slightly open. A (pressure) differential may be established across the device 410 based on the two checks being open in operation #2.

In operation #3, the regenerative elements or device 410 may be going trough a cooling cycle. The hot/outdoor side fluid may be pushed by the pump 404b towards the device 410, which may push out the fluid on the cold/indoor side through the unlatched vent associated with the pump 404a. During operation #3, the vent and check associated with the pump 404b may be latched and closed, respectively. During operation #3, the check. associated. with the pump 404a may be closed.

In operation #4, the hot/outdoor side thud pump 404b may be turned-off; disengaged, or withdrawn. The check associated with the pump 404b may be opened to bring in hot ambient fluid. During operation #4, the vent associated with the pump 404a may be latched. During operation #4, the vent associated with the pump 404b may be latched. During operation #4, the check associated with the pump 404a may be open or slightly open. A (pressure) differential may be established across the device 410 based on the two checks being open in operation #4.

In operation #2, the check associated with the pump 404b was described above as being open or slightly open. Similarly, in operation #4, the check associated with the pump 404a was described above as being open or slightly open. The states of the referenced checks under such circumstances may be based on a passive control of the checks. Ideally, the check associated with the pump 404b may be closed in operation #2 and the check associated with the pump 404a may be closed in operation #4 in order to enhance the performance or efficiency of the system. In order to provide for such closure of the checks, an active control system may be used, potentially at greater cost relative to the use of passive controls. Thus, a trade-off may be made between performance/efficiency and cost in a given application.

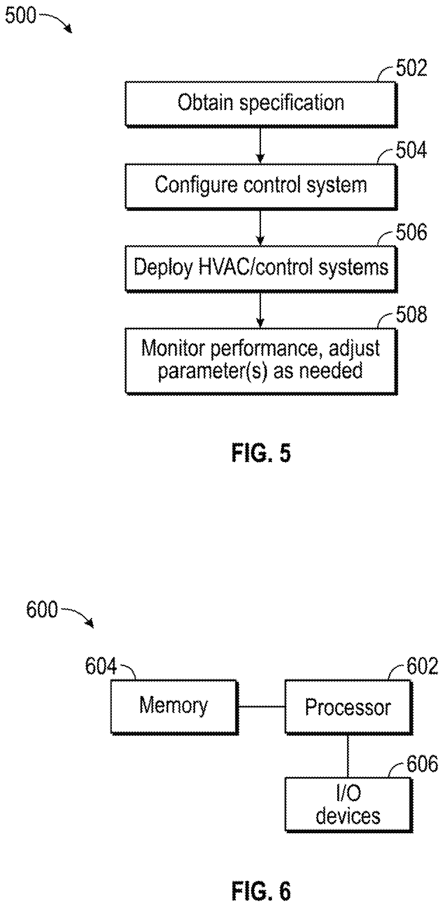

Referring to FIG. 5, a flow chart of an exemplary method 500 is shown. The method 500 may be used. in connection with one or more systems, components, or devices, such as those described herein. The method 500 may be used to provide heating or cooling to an environment, such as an indoor environment.

In block 502, a specification may be obtained. The specification may include one or more requirements associated with an environment. For example, the specification may include parameters related to capacity, load, or temperature lift that a heating, ventilation, and air-conditioning (HVAC) system may be required to provide.

In block 504, a control system may be designed or configured, potentially based on the specification or requirements of block 502. The control system may be configured to control a movement of fluid flow in one or more regenerator devices and a mixing of the fluid flow with ambient air.

In block 506, the HVAC and/or control systems may be deployed. As part of block 506, the systems may be turned-on or enabled for use.

In block 508, performance of the system(s) of block 506 may be monitored. As part of block 508, one or more parameters may be modified or adjusted. For example, a parameter may be modified or adjusted to improve the efficiency of a system. A parameter may be modified to provide for a different climate (e.g., a hotter indoor temperature), potentially based on or in response to a user input.

The method 500 is illustrative. In some embodiments, one or more of the blocks or operations (or a portion thereof) may be optional. In some embodiments, one or more blocks or operations not shown may be included. In some embodiments, the blocks or operations may execute in an order or sequence that is different from what is shown.

FIG. 6 illustrates a computing system 600 in accordance with one or more embodiments. The computing system 600 may be used as a control system, such as a control system to control an HVAC system.

The system 600 may include one or more processors 602 and memory 604. The memory 604 may store executable instructions. The executable instructions may be stored or organized in any manner and at any level of abstraction, such as in connection with one or more applications, processes, routines, procedures, methods, etc. The instructions, when executed by the one or more processors 602, may cause the system 600 to perform one or more methodological acts, such as those described herein.

In some embodiments, the system 600 may include logic devices, such as programmable logic devices (PLDs), field programmable gate arrays (FPGAs), etc. (not shown in FIG. 6).

The system 600 may include one or more input/output (I/O) devices 606. The I/O device(s) 606 may include one or more of a keyboard or keypad, a touchscreen or touch panel, a display screen, a microphone, a speaker, a mouse, a button, a remote control, a joystick, a printer, a telephone or mobile device (e.g., a smartphone), a sensor, etc. The I/O device(s) 606 may be configured to provide an interface to allow a user to interact with the system 600. For example the I/O device(s) 606 may support a graphic user interface (GUI) and/or voice-to-text capabilities.

Embodiments of the disclosure may be used to achieve an oscillatory flow and bulk flow mixing in a compact manner. Embodiments may utilize any working fluid, such as air, in direct contact with the active material which improves simplicity and efficiency, or may isolate the beat transfer media contacting the active material from the ambient air using an intermediate heat exchanger. In some embodiments, zonal personalized space heating/cooling may be provided. Embodiments of the disclosure may have few linear mechanical displacement parts, thereby improving the reliability and availability of a given system.

Embodiments of the disclosure may be used in active regenerative heating/cooling systems, such as electrocaloric and magnetocaloric thermal generators. Fluid handling described herein may also be applied to, e.g., power generation using active regenerative systems. Such techniques may be used for waste heat recovery and primary power generation.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

## Claims

1. A method of transferring heat with a heating, ventilation, and air-conditioning (HVAC) system, comprising:
applying an energy field in a phase shift pattern to an active material (110) to alternately induce heating and cooling cycles in the active material (110);
controlling a movement of fluid back and forth across the active material (110) synchronized with the heating and cooling cycles of the active material (110), and mixing the fluid with ambient air.

2. The method of claim 1, wherein the active material (110) is coupled to a first valve on a first side of the active material, the method further comprising:
controlling a state of the first valve (102) in order to control the movement of the fluid and the mixing of the fluid, and wherein the active material is coupled to a second valve (118) on a second side of the active material, the method further comprising:
alternating between opening and closing the first and second valves (102, 118), wherein at any given point in time one of the first and second valves is commanded to open and the other of the first and second valves is commanded to close.

3. The method of claim 1, wherein the active material (110) is coupled to a first turbine fan (206) on a first side of the active material (110) and a second turbine fan (214) on a second side of the active material (110), the method further comprising:
controlling at least one of a speed, phase, and position of each of the first and second fans (206, 214) in order to control the movement of the fluid and the mixing of the fluid.

4. The method of claim 1, wherein the active material (110) comprises a first active material device (304) and a second active material device (312), the method further comprising:
applying the energy field and controlling the movement of the fluid across the first and second active material devices so as to cause the first and second active material devices to be substantially one-hundred eighty degrees out of phase with respect to one another.

5. The method of claim 1, wherein the active material (110) is coupled to a first pump (404a) on a first side of the active material and a second pump (404b) on a second side of the active material, and wherein the first pump (404a) is associated with a first vent and the second pump (404b) is associated with a second vent, the method further comprising:
controlling a state of the first and second vents in order to control the movement of the fluid and the mixing of the fluid, and preferably wherein the first pump (404a) is associated with a first check and the second pump (404b) is associated with a second check, and more preferably further comprising:
controlling a state of the first and second checks in order to control the movement of the fluid and the mixing of the fluid.

6. The method of claim 1, wherein the active material (110) comprises a first active material device (304) and a second active material device (312), the method further comprising:
operating the system in a first mode in which:
a stream of air from outside a conditioned space is directed to the first active material device (304) in one of a cooling cycle and a stream of the fluid is directed from the first active material device (304) to inside the conditioned space; and
a stream of air from inside the conditioned space is directed to the second active material device (312) in a heating cycle and a stream of the fluid from the second active material device (312) is directed to outside the conditioned space; and
operating the system in a second mode in which:
a stream of air from inside the conditioned space is directed to the first active material device (304) in a heating cycle and a stream of the fluid from the first active material device (304) is directed to outside the conditioned space; and
a stream of air from outside the conditioned space is directed to the second active material device (312) in a cooling cycle and a stream of the fluid from the second active material device (312) is directed to inside the conditioned space.

7. The method of claim 1, wherein the active material (110) comprises a first active material device (304) and a second active material device (312), the method further comprising:
operating the system in a first mode in which:
a stream of air from outside a conditioned space is directed to the first active material device (304) in one of a heating cycle and a stream of the fluid is directed from the first active material device (304) to inside the conditioned space; and
a stream of air from inside the conditioned space is directed to the second active material device (312) in a cooling cycle and a stream of the fluid from the second active material device (312) is directed to outside the conditioned space; and
operating the system in a second mode in which:
a stream of air from inside the conditioned space is directed to the first active material device (304) in a cooling cycle and a stream of the fluid from the first active material device (304) is directed to outside the conditioned space; and
a stream of air from outside the conditioned space is directed to the second active material device (312 in a heating cycle and a stream of the fluid from the second active material device (312) is directed to inside the conditioned space.

8. A system comprising:
a heating, ventilation, and air-conditioning (HVAC) system comprising an active material (110); and
a control system configured to apply an energy field in a phase shift pattern to the active material (110) to alternately induce heating and cooling cycles in the active material (110), and to control a movement of fluid back and forth across the active material (110) synchronized with the heating and cooling cycles of the active material and a mixing of the fluid with ambient air.

9. The system of claim 8, further comprising:
a first valve (102) coupled to a first side of the active material; and
a second valve (118) coupled to a second side of the active material,
wherein the control system is configured to control a state of the first and second valves in order to control the movement of the fluid and the mixing of the fluid, wherein the control system is configured to command the first and second valves (102, 118) to be alternately opened and closed, wherein at any given point in time one of the first and second valves (102, 118) is commanded to open and the other of the first and second valves is commanded to close.

10. The system of claim 8, further comprising:
a first turbine fan (206) coupled to the active material on a first side of the active material; and
a second turbine fan (214) coupled to the at least one regenerator device on a second side of the active material,
wherein the control system is configured to control at least one of a speed, phase, and position of each of the first and second fans in order to control the movement of the fluid and the mixing of the fluid.

11. The system of claim 8, wherein the active material comprises a first active material device (304) and a second active material device (312), and wherein
the control system is configured to cause the first and second active material devices to be substantially one-hundred eighty degrees out of phase with respect to one another regarding an oriented direction of the movement of the fluid across the first and second active material devices.

12. The system of claim 8, further comprising:
a first pump (404a) associated with a first check and coupled to the active material on a first side of the active material; and
a second pump (404b) associated with a second check and coupled to the at least one regenerator device on a second side of the active material,
wherein the first pump (404a) is associated with a first vent, and
wherein the second pump (404b) is associated with a second vent, and
wherein the control system is configured to control a state of the first and second vents and a state of the first and second checks in order to control the movement of the fluid and the mixing of the fluid.

13. The system of claim 8, wherein the active material comprises a first active material device (304) and a second active material device (312), wherein the controller system is configured to:
operate the system in a first mode in which:
a stream of air from outside a conditioned space is directed to the first active material device (304) in one of a cooling cycle and a stream of the fluid is directed from the first active material device (304) to inside the conditioned space; and
a stream of air from inside the conditioned space is directed to the second active material device (312) in a heating cycle and a stream of the fluid from the second active material device (312) is directed to outside the conditioned space; and
operate the system in a second mode in which:
a stream of air from inside the conditioned space is directed to the first active material device (304) in a heating cycle and a stream of the fluid from the first active material device (304) is directed to outside the conditioned space; and
a stream of air from outside the conditioned space is directed to the second active material device (312) in a cooling cycle and a stream of the fluid from the second active material device (312) is directed to inside the conditioned space.

14. The system of claim 8, wherein the active material comprises a first active material device (304) and a second active material device (312), wherein the control system is configured to:
operate the system in a first mode in which:
a stream of air from outside a conditioned space is directed to the first active material device (304) in one of a heating cycle and a stream of the fluid is directed from the first active material device (304) to inside the conditioned space; and
a stream of air from inside the conditioned space is directed to the second active material device (312) in a cooling cycle and a stream of the fluid from the second active material device (312) is directed to outside the conditioned space; and
operate the system in a second mode in which:
a stream of air from inside the conditioned space is directed to the first active material device (304) in a cooling cycle and a stream of the fluid from the first active material device (304) is directed to outside the conditioned space; and
a stream of air from outside the conditioned space is directed to the second active material device (312) in a heating cycle and a stream of the fluid from the second active material device (312) is directed to inside the conditioned space.

15. The system of any of claims 8-14, wherein the active material (110) comprises an electrocaloric material.

## Patentansprüche

1. Verfahren zum Überführen von Wärme mit einem Heizungs-, Lüftungs- und Klimatechnik- (HVAC) System, umfassend:
Anlegen eines Energiefeldes in einem Phasenverschiebungsmuster an ein aktives Material (110), um abwechselnd Heiz- und Kühlzyklen in dem aktiven Material (110) einzuleiten;
Steuern einer Bewegung von Fluid rückwärts und vorwärts über das aktive Material (110), synchronisiert mit den Heiz- und Kühlzyklen des aktiven Materials (110) und Mischen des Fluids mit Umgebungsluft.

2. Verfahren nach Anspruch 1, wobei das aktive Material (110) an ein erstes Ventil an einer ersten Seite des aktiven Materials gekoppelt ist, wobei das Verfahren weiter umfasst:
Steuern eines Zustands des ersten Ventils (102), um die Bewegung des Fluids und das Mischen des Fluids zu steuern, und wobei das aktive Material an ein zweites Ventil (118) an einer zweiten Seite des aktiven Materials gekoppelt ist, wobei das Verfahren weiter umfasst:
Abwechseln zwischen Öffnen und Schließen des ersten und zweiten Ventils (102, 118), wobei zu einem gegebenen Zeitpunkt einem von dem ersten und zweiten Ventil befohlen wird, sich zu öffnen, und dem anderen von dem ersten und zweiten Ventil befohlen wird, sich zu schließen.

3. Verfahren nach Anspruch 1, wobei das aktive Material (110) an einen ersten Turbinenlüfter (206) an einer ersten Seite des aktiven Materials (110) und einen zweiten Turbinenlüfter (214) an einer zweiten Seite des aktiven Materials (110) gekoppelt ist, wobei das Verfahren weiter umfasst:
Steuern mindestens einer von einer Geschwindigkeit, Phase und Position jedes des ersten und zweiten Lüfters (206, 214), um die Bewegung des Fluids und das Mischen des Fluids zu steuern.

4. Verfahren nach Anspruch 1, wobei das aktive Material (110) eine erste aktive Materialvorrichtung (304) und eine zweite aktive Materialvorrichtung (312) umfasst, wobei das Verfahren weiter umfasst:
Anlegen des Energiefeldes und Steuern der Bewegung des Fluids über die erste und zweite aktive Materialvorrichtung, um die erste und zweite aktive Materialvorrichtung zu veranlassen, im Wesentlichen hundertachtzig Grad in Bezug zueinander phasenverschoben zu sein.

5. Verfahren nach Anspruch 1, wobei das aktive Material (110) an eine erste Pumpe (404a) an einer ersten Seite des aktiven Materials und eine zweite Pumpe (404b) an einer zweiten Seite des aktiven Materials gekoppelt ist und wobei die erste Pumpe (404a) mit einer ersten Entlüftungsöffnung verknüpft ist und die zweite Pumpe (404b) mit einer zweiten Entlüftungsöffnung verknüpft ist, wobei das Verfahren weiter umfasst:
Steuern eines Zustands der ersten und zweiten Entlüftungsöffnung, um die Bewegung des Fluids und das Mischen des Fluids zu steuern, und wobei vorzugsweise die erste Pumpe (404a) mit einer ersten Regulierung verknüpft ist und die zweite Pumpe (404b) mit einer zweiten Regulierung verknüpft ist, und bevorzugter weiter umfassend:
Steuern eines Zustands der ersten und zweiten Regulierung, um die Bewegung des Fluids und das Mischen des Fluids zu steuern.

6. Verfahren nach Anspruch 1, wobei das aktive Material (110) eine erste aktive Materialvorrichtung (304) und eine zweite aktive Materialvorrichtung (312) umfasst, wobei das Verfahren weiter umfasst:
Betreiben des Systems in einem ersten Modus, in dem:
ein Luftstrom von außerhalb eines klimatisierten Raums in einem von einem Kühlzyklus zu der ersten aktiven Materialvorrichtung (304) gelenkt wird und ein Fluidstrom von der ersten aktiven Materialvorrichtung (304) zur Innenseite des klimatisierten Raums gelenkt wird; und
ein Luftstrom von innerhalb des klimatisierten Raums in einem Heizzyklus zu der zweiten aktiven Materialvorrichtung (312) gelenkt wird und ein Fluidstrom von der zweiten aktiven Materialvorrichtung (312) zur Außenseite des klimatisierten Raums gelenkt wird; und
Betreiben des Systems in einem zweiten Modus, in dem:
ein Luftstrom von innerhalb des klimatisierten Raums in einem Heizzyklus zu der ersten aktiven Materialvorrichtung (304) gelenkt wird und ein Fluidstrom von der ersten aktiven Materialvorrichtung (304) zur Außenseite des klimatisierten Raums gelenkt wird; und
ein Luftstrom von außerhalb des klimatisierten Raums in einem Kühlzyklus zu der zweiten aktiven Materialvorrichtung (312) gelenkt wird und ein Fluidstrom von der zweiten aktiven Materialvorrichtung (312) zur Innenseite des klimatisierten Raums gelenkt wird.

7. Verfahren nach Anspruch 1, wobei das aktive Material (110) eine erste aktive Materialvorrichtung (304) und eine zweite aktive Materialvorrichtung (312) umfasst, wobei das Verfahren weiter umfasst:
Betreiben des Systems in einem ersten Modus, in dem:
ein Luftstrom von außerhalb eines klimatisierten Raums in einem von einem Heizzyklus zu der ersten aktiven Materialvorrichtung (304) gelenkt wird und ein Fluidstrom von der ersten aktiven Materialvorrichtung (304) zur Innenseite des klimatisierten Raums gelenkt wird; und
ein Luftstrom von innerhalb des klimatisierten Raums in einem Kühlzyklus zu der zweiten aktiven Materialvorrichtung (312) gelenkt wird und ein Fluidstrom von der zweiten aktiven Materialvorrichtung (312) zur Außenseite des klimatisierten Raums gelenkt wird; und
Betreiben des Systems in einem zweiten Modus, in dem:
ein Luftstrom von innerhalb des klimatisierten Raums in einem Kühlzyklus zu der ersten aktiven Materialvorrichtung (304) gelenkt wird und ein Fluidstrom von der ersten aktiven Materialvorrichtung (304) zur Außenseite des klimatisierten Raums gelenkt wird; und
ein Luftstrom von außerhalb des klimatisierten Raums in einem Heizzyklus zu der zweiten aktiven Materialvorrichtung (312) gelenkt wird und ein Fluidstrom von der zweiten aktiven Materialvorrichtung (312) zur Innenseite des klimatisierten Raums gelenkt wird.

8. System, umfassend:
ein Heizungs-, Lüftungs- und Klimatechnik- (HVAC) System, das ein aktives Material (110) umfasst; und
ein Steuersystem, das gestaltet ist, ein Energiefeld in einem Phasenverschiebungsmuster an das aktive Material (110) anzulegen, um abwechselnd Heiz- und Kühlzyklen in dem aktiven Material (110) einzuleiten, und eine Bewegung von Fluid rückwärts und vorwärts über das aktive Material (110), synchronisiert mit den Heiz- und Kühlzyklen des aktiven Materials und ein Mischen des Fluids mit Umgebungsluft zu steuern.

9. System nach Anspruch 8, weiter umfassend:
ein erstes Ventil (102), das an eine erste Seite des aktiven Materials gekoppelt ist; und
ein zweites Ventil (118), das an eine zweite Seite des aktiven Materials gekoppelt ist,
wobei das Steuersystem gestaltet ist, einen Zustand des ersten und zweiten Ventils zu steuern, um die Bewegung des Fluids und das Mischen des Fluids zu steuern, wobei das Steuersystem gestaltet ist, dem ersten und zweiten Ventil (102, 118) zu befehlen, abwechselnd geöffnet und geschlossen zu werden, wobei zu einem gegebenen Zeitpunkt einem von dem ersten und zweiten Ventil befohlen wird, sich zu öffnen, und dem anderen von dem ersten und zweiten Ventil befohlen wird, sich zu schließen.

10. System nach Anspruch 8, weiter umfassend:
einen ersten Turbinenlüfter (206), der an das aktive Material an einer ersten Seite des aktiven Materials gekoppelt ist; und
einen zweiten Turbinenlüfter (214), der an die mindestens eine Regeneratorvorrichtung an einer zweiten Seite des aktiven Materials gekoppelt ist,
wobei das Steuersystem gestaltet ist, mindestens eine von einer Geschwindigkeit, Phase und Position jedes des ersten und zweiten Lüfters zu steuern, um die Bewegung des Fluids und das Mischen des Fluids zu steuern.

11. System nach Anspruch 8, wobei das aktive Material eine erste aktive Materialvorrichtung (304) und eine zweite aktive Materialvorrichtung (312) umfasst und wobei
das Steuersystem gestaltet ist, die erste und zweite aktive Materialvorrichtung zu veranlassen, hinsichtlich einer ausgerichteten Richtung der Bewegung des Fluids über die erste und zweite aktive Materialvorrichtung im Wesentlichen hundertachtzig Grad in Bezug zueinander phasenverschoben zu sein.

12. System nach Anspruch 8, weiter umfassend:
eine erste Pumpe (404a), die mit einer ersten Regulierung verknüpft ist und an das aktive Material an einer ersten Seite des aktiven Materials gekoppelt ist; und
eine zweite Pumpe (404b), die mit einer zweiten Regulierung verknüpft ist und an die mindestens eine Regeneratorvorrichtung an einer zweiten Seite des aktiven Materials gekoppelt ist,
wobei die erste Pumpe (404a) mit einer ersten Entlüftungsöffnung verknüpft ist und
wobei die zweite Pumpe (404b) mit einer zweiten Entlüftungsöffnung verknüpft ist, und
wobei das Steuersystem gestaltet ist, einen Zustand der ersten und zweiten Entlüftungsöffnung und einen Zustand der ersten und zweiten Regulierung zu steuern, um die Bewegung des Fluids und das Mischen des Fluids zu steuern.

13. System nach Anspruch 8, wobei das aktive Material eine erste aktive Materialvorrichtung (304) und eine zweite aktive Materialvorrichtung (312) umfasst, wobei das Steuersystem gestaltet ist zum:
Betreiben des Systems in einem ersten Modus, in dem:
ein Luftstrom von außerhalb eines klimatisierten Raums in einem von einem Kühlzyklus zu der ersten aktiven Materialvorrichtung (304) gelenkt wird und ein Fluidstrom von der ersten aktiven Materialvorrichtung (304) zur Innenseite des klimatisierten Raums gelenkt wird; und
ein Luftstrom von innerhalb des klimatisierten Raums in einem Heizzyklus zu der zweiten aktiven Materialvorrichtung (312) gelenkt wird und ein Fluidstrom von der zweiten aktiven Materialvorrichtung (312) zur Außenseite des klimatisierten Raums gelenkt wird; und
Betreiben des Systems in einem zweiten Modus, in dem:
ein Luftstrom von innerhalb des klimatisierten Raums in einem Heizzyklus zu der ersten aktiven Materialvorrichtung (304) gelenkt wird und ein Fluidstrom von der ersten aktiven Materialvorrichtung (304) zur Außenseite des klimatisierten Raums gelenkt wird; und
ein Luftstrom von außerhalb des klimatisierten Raums in einem Kühlzyklus zu der zweiten aktiven Materialvorrichtung (312) gelenkt wird und ein Fluidstrom von der zweiten aktiven Materialvorrichtung (312) zur Innenseite des klimatisierten Raums gelenkt wird.

14. System nach Anspruch 8, wobei das aktive Material eine erste aktive Materialvorrichtung (304) und eine zweite aktive Materialvorrichtung (312) umfasst, wobei das Steuersystem gestaltet ist zum:
Betreiben des Systems in einem ersten Modus, in dem:
ein Luftstrom von außerhalb eines klimatisierten Raums in einem von einem Heizzyklus zu der ersten aktiven Materialvorrichtung (304) gelenkt wird und ein Fluidstrom von der ersten aktiven Materialvorrichtung (304) zur Innenseite des klimatisierten Raums gelenkt wird; und
ein Luftstrom von innerhalb des klimatisierten Raums in einem Kühlzyklus zu der zweiten aktiven Materialvorrichtung (312) gelenkt wird und ein Fluidstrom von der zweiten aktiven Materialvorrichtung (312) zur Außenseite des klimatisierten Raums gelenkt wird; und
Betreiben des Systems in einem zweiten Modus, in dem:
ein Luftstrom von innerhalb des klimatisierten Raums in einem Kühlzyklus zu der ersten aktiven Materialvorrichtung (304) gelenkt wird und ein Fluidstrom von der ersten aktiven Materialvorrichtung (304) zur Außenseite des klimatisierten Raums gelenkt wird; und
ein Luftstrom von außerhalb des klimatisierten Raums in einem Heizzyklus zu der zweiten aktiven Materialvorrichtung (312) gelenkt wird und ein Fluidstrom von der zweiten aktiven Materialvorrichtung (312) zur Innenseite des klimatisierten Raums gelenkt wird.

15. System nach einem der Ansprüche 8-14, wobei das aktive Material (110) ein elektrokalorisches Material umfasst.

## Revendications

1. Procédé de transfert de chaleur avec un système de chauffage, ventilation et climatisation (HVAC), comprenant :
l'application d'un champ d'énergie dans un motif de déphasage à un matériau actif (110) pour induire en alternance des cycles de chauffage et de refroidissement dans le matériau actif (110) ;
la commande d'un mouvement de va-et-vient de fluide à travers le matériau actif (110) synchronisé avec les cycles de chauffage et de refroidissement du matériau actif (110), et le mélange du fluide avec de l'air ambiant.

2. Procédé selon la revendication 1, dans lequel le matériau actif (110) est couplé à une première soupape sur un premier côté du matériau actif, le procédé comprenant en outre :
la commande d'un état de la première soupape (102) afin de commander le mouvement du fluide et le mélange du fluide, et dans lequel le matériau actif est couplé à une seconde soupape (118) sur un second côté du matériau actif, le procédé comprenant en outre :
l'alternance entre l'ouverture et la fermeture des première et seconde soupapes (102, 118), dans lequel à tout moment donné une des première et seconde soupapes est commandée pour s'ouvrir et l'autre des première et seconde soupapes est commandée pour se fermer.

3. Procédé selon la revendication 1, dans lequel le matériau actif (110) est couplé à un premier ventilateur de turbine (206) sur un premier côté du matériau actif (110) et un second ventilateur de turbine (214) sur un second côté du matériau actif (110), le procédé comprenant en outre :
la commande au moins d'une d'une vitesse, phase et position de chacun des premier et second ventilateurs (206, 214) afin de commander le mouvement du fluide et le mélange du fluide.

4. Procédé selon la revendication 1, dans lequel le matériau actif (110) comprend un premier dispositif de matériau actif (304) et un second dispositif de matériau actif (312), le procédé comprenant en outre :
l'application du champ d'énergie et la commande du mouvement du fluide à travers les premier et second dispositifs de matériau actif de sorte à amener les premier et second dispositifs de matériau actif à être sensiblement à cent quatre-vingt degrés hors de phase l'un par rapport à l'autre.

5. Procédé selon la revendication 1, dans lequel le matériau actif (110) est couplé à une première pompe (404a) sur un premier côté du matériau actif et une seconde pompe (404b) sur un second côté du matériau actif, et dans lequel la première pompe (404a) est associée à un premier évent et la seconde pompe (404b) est associée à un second évent, le procédé comprenant en outre :
la commande d'un état des premier et second évents afin de commander le mouvement du fluide et le mélange du fluide, et de préférence dans lequel la première pompe (404a) est associée à un premier contrôle et la seconde pompe (404b) est associée à un second contrôle, et de manière davantage préférée comprenant en outre :
la commande d'un état des premier et second contrôles afin de commander le mouvement du fluide et le mélange du fluide.

6. Procédé selon la revendication 1, dans lequel le matériau actif (110) comprend un premier dispositif de matériau actif (304) et un second dispositif de matériau actif (312), le procédé comprenant en outre :
l'actionnement du système dans un premier mode dans lequel :
un courant d'air de l'extérieur d'un espace climatisé est dirigé vers le premier dispositif de matériau actif (304) dans un d'un cycle de refroidissement et un courant du fluide est dirigé du premier dispositif de matériau actif (304) à l'intérieur de l'espace climatisé ; et
un courant d'air de l'intérieur de l'espace climatisé est dirigé vers le second dispositif de matériau actif (312) dans un cycle de chauffage et un courant du fluide du second dispositif de matériau actif (312) est dirigé à l'extérieur de l'espace climatisé ; et
l'actionnement du système dans un second mode dans lequel :
un courant d'air de l'intérieur de l'espace climatisé est dirigé vers le premier dispositif de matériau actif (304) dans un cycle de chauffage et un courant du fluide du premier dispositif de matériau actif (304) est dirigé à l'extérieur de l'espace climatisé ; et
un courant d'air de l'extérieur de l'espace climatisé est dirigé vers le second dispositif de matériau actif (312) dans un cycle de refroidissement et un courant du fluide du second dispositif de matériau actif (312) est dirigé à l'intérieur de l'espace climatisé.

7. Procédé selon la revendication 1, dans lequel le matériau actif (110) comprend un premier dispositif de matériau actif (304) et un second dispositif de matériau actif (312), le procédé comprenant en outre :
l'actionnement du système dans un premier mode dans lequel :
un courant d'air de l'extérieur d'un espace climatisé est dirigé vers le premier dispositif de matériau actif (304) dans un d'un cycle de chauffage et un courant du fluide est dirigé du premier dispositif de matériau actif (304) à l'intérieur de l'espace climatisé ; et
un courant d'air de l'intérieur de l'espace climatisé est dirigé vers le second dispositif de matériau actif (312) dans un cycle de refroidissement et un courant du fluide du second dispositif de matériau actif (312) est dirigé vers l'extérieur de l'espace climatisé ; et
l'actionnement du système dans un second mode dans lequel :
un courant d'air de l'intérieur de l'espace climatisé est dirigé vers le premier dispositif de matériau actif (304) dans un cycle de refroidissement et un courant du fluide du premier dispositif de matériau actif (304) est dirigé à l'extérieur de l'espace climatisé ; et
un courant d'air de l'extérieur de l'espace climatisé est dirigé vers le second dispositif de matériau actif (312) dans un cycle de chauffage et un courant du fluide du second dispositif de matériau actif (312) est dirigé à l'intérieur de l'espace climatisé.

8. Système comprenant :
un système de chauffage, ventilation et climatisation (HVAC) comprenant un matériau actif (110) ; et
un système de commande configuré pour appliquer un champ d'énergie dans un motif de déphasage au matériau actif (110) pour induire en alternance des cycles de chauffage et de refroidissement dans le matériau actif (110), et pour commander un mouvement de va-et-vient de fluide à travers le matériau actif (110) synchronisé avec les cycles de chauffage et de refroidissement du matériau actif et un mélange du fluide avec de l'air ambiant.

9. Système selon la revendication 8, comprenant en outre :
une première soupape (102) couplée à un premier côté du matériau actif ; et
une seconde soupape (118) couplée à un second côté du matériau actif,
dans lequel le système de commande est configuré pour commander un état des première et seconde soupapes afin de commander le mouvement du fluide et le mélange du fluide, dans lequel le système de commande est configuré pour commander l'ouverture et la fermeture en alternance des première et seconde soupapes (102, 118), dans lequel à tout moment donné une des première et seconde soupapes (102, 118) est commandée pour s'ouvrir et l'autre des première et seconde soupapes est commandée pour se fermer.

10. Système selon la revendication 8, comprenant en outre :
un premier ventilateur de turbine (206) couplé au matériau actif sur un premier côté du matériau actif ; et
un second ventilateur de turbine (214) couplé à l'au moins un dispositif régénérateur sur un second côté du matériau actif,
dans lequel le système de commande est configuré pour commander au moins une d'une vitesse, phase et position de chacun des premier et second ventilateurs afin de commander le mouvement du fluide et le mélange du fluide.

11. Système selon la revendication 8, dans lequel le matériau actif comprend un premier dispositif de matériau actif (304) et un second dispositif de matériau actif (312), et dans lequel
le système de commande est configuré pour amener les premier et second dispositifs de matériau actif à être sensiblement à cent quatre-vingt degrés hors de phase l'un par rapport à l'autre concernant une direction orientée du mouvement du fluide à travers les premier et second dispositifs de matériau actif.

12. Système selon la revendication 8, comprenant en outre :
une première pompe (404a) associée à un premier contrôle et couplée au matériau actif sur un premier côté du matériau actif ; et
une seconde pompe (404b) associée à un second contrôle et couplée à l'au moins un dispositif régénérateur sur un second côté du matériau actif,
dans lequel la première pompe (404a) est associée à un premier évent, et
dans lequel la seconde pompe (404b) est associée à un second évent, et
dans lequel le système de commande est configuré pour commander un état des premier et second évents et un état des premier et second contrôles afin de commander le mouvement du fluide et le mélange du fluide.

13. Système selon la revendication 8, dans lequel le matériau actif comprend un premier dispositif de matériau actif (304) et un second dispositif de matériau actif (312), dans lequel le système de dispositif de commande est configuré pour :
actionner le système dans un premier mode, dans lequel :
un courant d'air de l'extérieur d'un espace climatisé est dirigé vers le premier dispositif de matériau actif (304) dans un d'un cycle de refroidissement et un courant du fluide est dirigé du premier dispositif de matériau actif (304) à l'intérieur de l'espace climatisé ; et
un courant d'air de l'intérieur de l'espace climatisé est dirigé vers le second dispositif de matériau actif (312) dans un cycle de chauffage et un courant du fluide du second dispositif de matériau actif (312) est dirigé à l'extérieur de l'espace climatisé ; et
actionner le système dans un second mode, dans lequel :
un courant d'air de l'intérieur de l'espace climatisé est dirigé vers le premier dispositif de matériau actif (304) dans un cycle de chauffage et un courant du fluide du premier dispositif de matériau actif (304) est dirigé à l'extérieur de l'espace climatisé ; et
un courant d'air de l'extérieur de l'espace climatisé est dirigé vers le second dispositif de matériau actif (312) dans un cycle de refroidissement et un courant du fluide du second dispositif de matériau actif (312) est dirigé à l'intérieur de l'espace climatisé.

14. Système selon la revendication 8, dans lequel le matériau actif comprend un premier dispositif de matériau actif (304) et un second dispositif de matériau actif (312), dans lequel le système de commande est configuré pour :
actionner le système dans un premier mode, dans lequel :
un courant d'air de l'extérieur d'un espace climatisé est dirigé vers le premier dispositif de matériau actif (304) dans un d'un cycle de chauffage et un courant du fluide est dirigé du premier dispositif de matériau actif (304) à l'intérieur de l'espace climatisé ; et
un courant d'air de l'intérieur de l'espace climatisé est dirigé vers le second dispositif de matériau actif (312) dans un cycle de refroidissement et un courant du fluide du second dispositif de matériau actif (312) est dirigé à l'extérieur de l'espace climatisé ; et
actionner le système dans un second mode, dans lequel :
un courant d'air de l'intérieur de l'espace climatisé est dirigé vers le premier dispositif de matériau actif (304) dans un cycle de refroidissement et un courant du fluide du premier dispositif de matériau actif (304) est dirigé à l'extérieur de l'espace climatisé ; et
un courant d'air de l'extérieur de l'espace climatisé est dirigé vers le second dispositif de matériau actif (312) dans un cycle de chauffage et un courant du fluide du second dispositif de matériau actif (312) est dirigé à l'intérieur de l'espace climatisé.

15. Système selon l'une quelconque des revendications 8-14, dans lequel le matériau actif (110) comprend un matériau électrocalorique.
